# EUROPÄISCHE PATENTSCHRIFT

(11) **EP 1 861 306 B1**
(45) Veröffentlichungstag und Bekanntmachung des Hinweises auf die Patenterteilung: **07.10.2009**
(21) Anmeldenummer: 06723569.7
(22) Anmeldetag: 21.03.2006
(51) Int. Cl.: B62D 53/08

(54) **VORRICHTUNG ZUM NACHWEIS UND ZUR ANZEIGE DER POSITION VON KOMPONENTEN VON FAHRZEUGKUPPLUNGEN**
DEVICE FOR DETECTING AND DISPLAYING THE POSITION OF COMPONENTS OF VEHICLE COUPLINGS
DISPOSITIF DE DETECTION ET D'INDICATION DE LA POSITION D'ELEMENTS D'ATTELAGE D'UN VEHICULE

(30) Priorität: 24.03.2005 DE 102005014977
(43) Veröffentlichungstag der Anmeldung: 05.12.2007
(60) Teilanmeldung: 09162089.8
(73) Patentinhaber: Jost-Werke GmbH, 63263 Neu-Isenburg (DE)
(72) Erfinder: SCHMIDT, Dirk, 65559 Limburg (DE); SAUPE, Swen, 55122 Mainz (DE); STRÜTT, Achim, 64560 Riedstadt (DE); ALGÜERA, José, Manuel, Gallego, 63739 Aschaffenburg (DE)
(74) Vertreter: Mehler, Klaus
(86) Internationale Anmeldenummer: PCT/EP2006/002555
(87) Internationale Veröffentlichungsnummer: WO 2006/100025

(56) Entgegenhaltungen:
- EP-A- 0 509 137
- DE-A1- 10 241 904
- US-A- 3 868 127
- US-A- 5 617 072
- US-A- 6 095 544
- US-A- 6 100 794
- US-B1- 6 222 457
- PATENT ABSTRACTS OF JAPAN Bd. 2003, Nr. 03, 5. Mai 2003 (2003-05-05) -& JP 2002 331971 A (HINO MOTORS LTD), 19. November 2002 (2002-11-19)

## Beschreibung

Die Erfindung betrifft die Anordnung einer Vorrichtung zum Nachweis und zum Anzeigen der Position von Komponenten von Fahrzeugkupplungen, insbesondere von Sattelkupplungen an einer Verschiebeeinrichtung, wobei die Vorrichtung mindestens einen Sensor und mindestens ein Anzeigeelement sowie eine eigene Spannungsquelle umfasst. Eine solche Anordnung ist aus de JP-A-2002 331 971 bekannt.

Aus der DE 102 41 904 A1 ist eine Vorrichtung zur Anzeige des Verschlusszustandes einer Sattelkupplung bekannt, wobei ein erster Sensor im Bereich der Aufnahmeöffnung der Sattelkupplung angeordnet ist und den Königszapfen detektiert und ein zweiter Sensor einen magnetempfindlichen Sensor umfasst, der mit einem an einem Bedienungshebel angebrachten Magneten zusammenwirkt, wobei beide Sensoren auf unterschiedliche Wirkmechanismen beruhen. Diese Sensoren sind an eine Anzeigeeinheit im Führerhaus der Sattelzugmaschine angeschlossen.

Die Signalübertragung sowie die Energieversorgung der Sensoren erfolgt im Regelfall über Kabelsätze und die Signalauswertung über entsprechende Steuerelektroniken. Der Installationsaufwand für solche Systeme ist groß und steht häufig in einem schlechten Verhältnis zum erzielten Effekt, was einer größeren Verbreitung dieser an sich wünschenswerten und der Sicherheit dienenden Ausstattung hinderlich entgegensteht.

Aus der US 6,736,420 B2 ist eine Verschiebevorrichtung für Sattelkupplungen bekannt, die zwei Führungsschienen mit Zahnleisten aufweist, auf denen ein Schlitten verschiebbar gelagert ist, der die Sattelkupplung trägt. Am Schlitten ist eine Veniegelungseinrichtung mit Blockierstücken angeordnet, die in die Zahnleisten eingreifen. Eines der Blockierstücke ist mit einem Öffnungshebel verbunden, der wiederum mit einer Betätigungseinrichtung, z. B. einem Zuggriffhebel zur manuellen Betätigung verbunden sein kann. Auch bei dieser bekannten Verschiebevorrichtung ist es notwendig, dass der Fahrer die ordnungsgemäße Verriegelung des Schlittens visuell kontrolliert bevor er losfährt.

Unabhängig von dem Vorhandensein von Anzeigeeinrichtungen im Fahrerhaus muss der Fahrer vor Beginn der Fahrt eine visuelle Überprüfung des Fahrzeugs, der Sattelkupplung, der Verschlusseinrichtung etc. durchführen.

In der Regel werden mechanische Verschlussanzeigen verwendet, die je nach Ausführung und Lichtverhältnissen besser oder schlechter erkannt werden können. Dies kann den Fahrzeugcheck vor Antritt der Fahrt deutlich erschweren und im Extremfall sogar zu fehlerhaftem Kuppeln führen.

Die US 6,222,457 B1 offenbart ein System zum Erkennen eines mittels einer Hakenkupplung an einem Zugfahrzeug befestigbaren Anhängers. Das System umfasst eine an dem Stoßfänger des Zugfahrzeugs adaptierbare Sende- und Empfangseinrichtung, durch welche der Fahrer ein optisches und akustisches Signal erhält, so dass das Risiko einer Kollision während des Ankuppelvorgangs gemindert ist. In dem Gehäuse der Sende- und Empfangseinrichtung sind ein Sensor, eine elektrische Spannungsquelle und ein Anzeigeelement untergebracht.

Es ist daher Aufgabe der Erfindung, eine Vorrichtung zum Nachweisen und zum Anzeigen der Position von Komponenten von Fahrzeugkupplungen an einer Verschiebeeinrichtung bereitzustellen, die eine visuelle Überprüfung dieser Komponenten erleichtert.

Diese Aufgabe wird mit einer Vorrichtung gelöst, bei welcher der mindestens eine Sensor, das mindestens eine Anzeigeelement und die Spannungsquelle in einem gemeinsamen Gehäuse einer kombinierten Sensor- und Anzeigeeinheit angeordnet sind, welche an der Außenseite einer Verschiebeeinrichtung, die eine Zahnleiste und auf einem eine Sattelkupplung tragenden Schlitten Blockierstife aufweist, und benachbart zu einem Blockierstück, das in Verriegelungsstellung mit dem Sensor der Sensoreinheit zusammenwirkt, angeordnet ist. Der Vorteil der Vorrichtung besteht darin, dass ein kompaktes Gerät zur Verfügung gestellt wird, das am Ort der Überprüfung platziert werden kann und dort auch ein vorzugsweise optisches oder akustisches Signal abgibt. Eine aufwendige Verkabelung der Sensoreinheit mit einer im Fahrerhaus angeordneten Anzeigeeinrichtung entfällt. Es wird daher ein kostengünstiges Gerät zur Verfügung gestellt, das an den Stellen problemlos angeordnet werden kann, wo eine Überprüfung durchgeführt werden soll. Die visuelle Überprüfung kann durch den Fahrer im Vorbeigehen erfolgen, ohne dass er zusätzliche Hilfsmittel, wie z. B. Taschenlampen etc. benötigt, um die Position einer Verschiebeeinrichtung zu überprüfen.

Es ist mit der Vorrichtung möglich, an Ort und Stelle die exakte Position der Verschiebeeinrichtung, d. h. des Schlittens anzuzeigen. Zu diesem Zweck kann die Anzeigeeinrichtung mehrere Anzeigeelemente oder auch eine digitale oder analoge Anzeige aufweisen, die die Position beispielsweise in Zentimetern von einem Fixpunkt angibt.

Die kombinierte Sensor- und Anzeigeeinheit weist eine eigene Spannungsquelle auf, die vorzugsweise im Gehäuse angeordnet ist. Diese Maßnahme trägt ebenfalls zur universellen Einsetzbarkeit der erfindungsgemäßen Vorrichtung bei. Eine Verkabelung zur Stromversorgung entfällt. Als Spannungsquelle können Batterien, Akkus oder z. B. elektrokinematische Generatoren verwendet werden.

Vorzugsweise weist die kombinierte Sensor- und Anzeigeeinheit eine elektronische Auswerteeinheit auf. Mit dieser Auswerteeinheit kann nicht nur das Sensorsignal dahingehend ausgewertet werden, ob ein Verschlusszustand vorliegt oder nicht (Ja/Nein-Signal), sondern eine solche Auswerteeinheit ermöglicht es auch, den Zustand der Energieversorgung (z. B. Akku oder Batterie) auszuwerten.

Als Sensoren können induktive Sensoren, Magnetsensoren, Kraftsensoren, Drucksensoren oder Reedsensoren in Betracht kommen. Vorzugsweise arbeiten die Sensoren berührungslos, wobei elektromagnetische Sensoren bevorzugt sind.

Je nach Einsatzort kann der Sensor auch ein Schaltelement, insbesondere ein mechanisches Schaltelement, aufweisen. Die Anzeigeeinheit weist vorzugsweise ein am Gehäuse angeordnetes optisches Anzeigeelement auf. Dies kann z. B. eine Lampe, insbesondere eine LED-Anzeige sein. Hierbei ist es bevorzugt, wenn dieses optische Anzeigeelement derart am Gehäuse angeordnet ist, dass es entsprechend der Position der Vorrichtung am Fahrzeug beim Vorgehen des Fahrers von diesem problemlos wahrgenommen werden kann.

Die Anzeigeeinheit kann ausschließlich oder zusätzlich ein akustisches Anzeigeelement und/oder ein mechanisches Anzeigeelement aufweise. Als mechanische Anzeigeelemente kommen Winker, Stifte oder ähnliches in Frage. Bei den akustischen Anzeigeelementen sind Piepser oder Summer bevorzugt. Die Anzeige am Anzeigeelement kann permanent erfolgen, beispielsweise durch ein Dauerlicht oder Dauerton. Die Anzeige kann aber auch nicht permanent ausgelegt sein und z. B. in Form eines Blinklichtes oder dergleichen.

Die erfindungsgemäße Anordnung der beschriebenen Vorrichtung sieht vor, dass die Vorrichtung an der Außenseite einer Verschiebeeinrichtung einer Sattelkupplung und benachbart zu einem Handbetätigungselement einer Verschluss- oder Verriegelungseinrichtung angeordnet ist, wobei ein Kontaktelement der Art an dem Handbetätigungselement angeordnet ist oder von dem Handbetätigungselement betätigbar ist, dass es in Schließ- und Verriegelungsstellung mit dem Sensor der Sensoreinheit zusammenwirkt.

Die Außenseite einer Verschiebeeinrichtung meint einen geeigneten Ort, der von außen leicht einsehbar ist, so dass die Anzeigeeinrichtung beim Vorbeigehen am Fahrzeug ohne weiteres erkennbar ist. Die Anordnung an oder in der Nähe eines Handbetätigungselementes bietet den Vorteil, dass es sich hier um einen Ort handelt, der ohnehin für den Fahrer zugänglich sein muss, weil er das Handbetätigungselement betätigen muss. Derartige Orte sind leicht einsehbar, so dass dort die Vorrichtung bzw. deren Anzeigeeinrichtung mühelos erkennbar ist.

Das Handbetätigungselement kann ein Zuggriffhebel sein.

Als Kontaktelement ist eine Metallplatte oder ein Magnet bevorzugt, die an dem Handbetätigungselement befestigt sind. Durch eine Bewegung des Handbetätigungselementes wird dieses Kontaktelement in dem Bereich des Sensors der Vorrichtung bewegt bzw. vom Sensor entfernt, so dass zwei unterschiedliche Stellungen des Handbetätigungselementes und damit auch der damit verbundenen Verriegelungseinrichtung detektiert werden kann.

Das Kontaktelement kann auch auf einem Schwenkelement angeordnet sein, das ein Handbetätigungselement ist. Das Kontaktelement wirkt mit dem Sensor der Vorrichtung zusammen, wenn es in den Bereich des Sensors verschwenkt wird.

Beispielhafte Ausführungsformen der Erfindung werden nachfolgend anhand der Zeichnungen näher erläutert. Es zeigen:
- Figur 1: eine schematische Darstellung der erfindungsgemäßen Vorrichtung und
- Fign. 2+3: die Anordnung der erfindungsgemäßen Vorrichtung an einer Verschiebeeinrichtung.

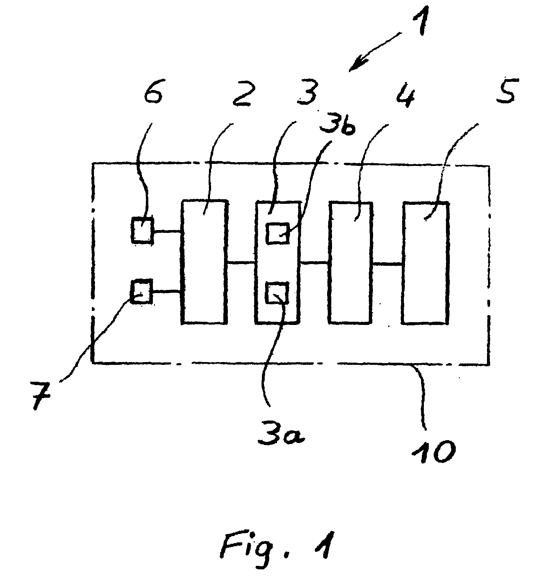

In der Figur 1 ist die erfindungsgemäße Vorrichtung 1 schematisch dargestellt. In einem gestrichelt dargestellten Gehäuse 10 sind eine Sensoreinheit 3 mit Sensoren 3a, 3b eine Anzeigeeinheit 2, eine Auswerteeinheit 4, eine Spannungsquelle 5 und Anzeigeelemente 6 und 7 untergebracht, die mit der Anzeigeeinheit 2 verbunden sind. Alle Einheiten sind an die Spannungsquelle 5 angeschlossen und teilweise auch miteinander verbunden, was nur schematisch in der Figur 1 dargestellt ist. Die dargestellte Vorrichtung 1 enthält sowohl ein akustisches Anzeigeelement 6 als auch ein optisches Anzeigeelement 7.

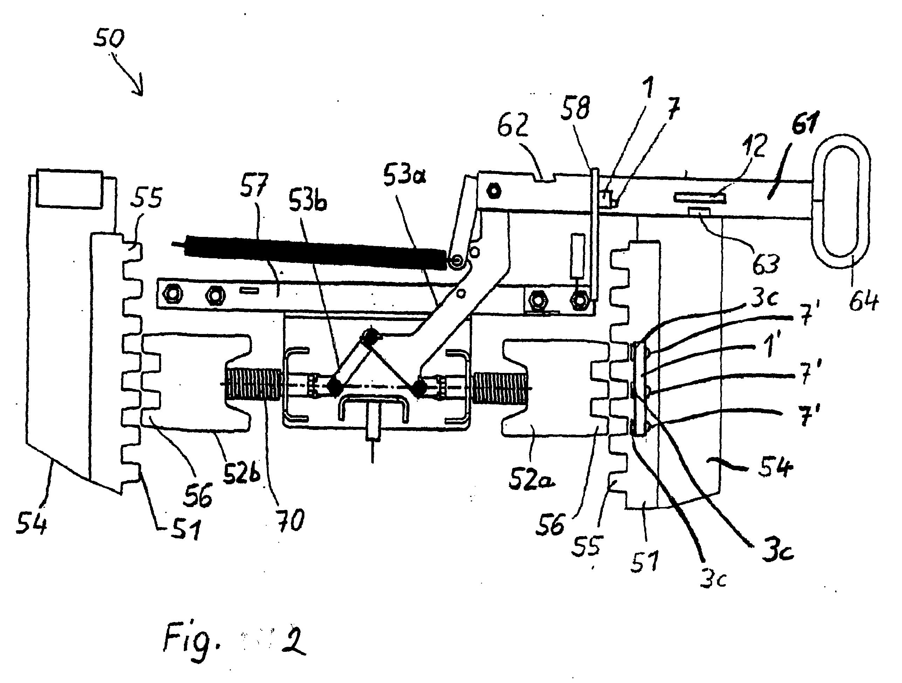

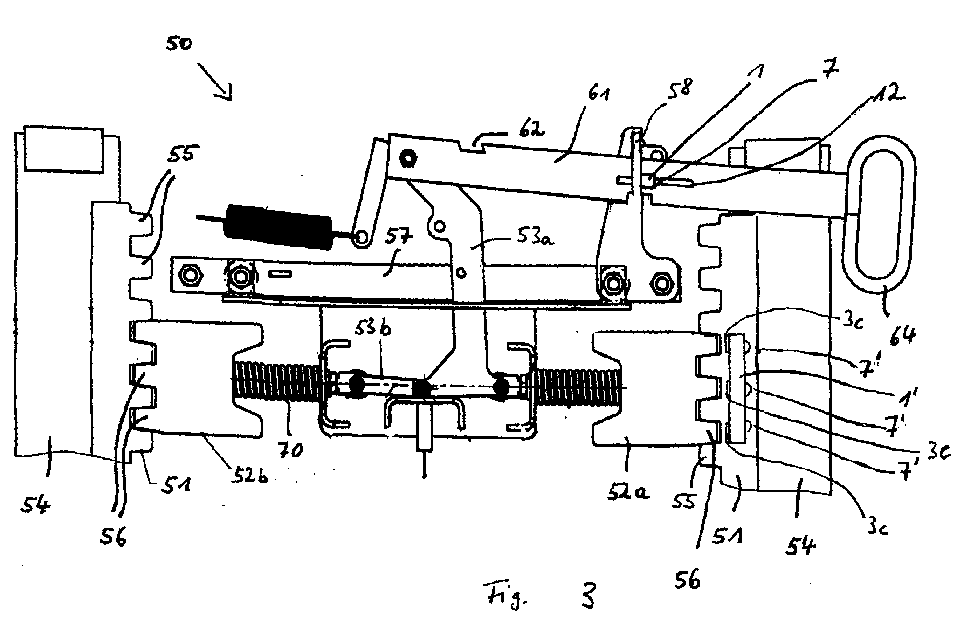

In den Figuren 2 und 3 ist eine Verschiebeeinrichtung 50 dargestellt. Auf einem Zugfahrzeug (nicht dargestellt) sind parallel zueinander angeordnete Führungsschienen 54 mit Zahnleisten 51 und Zähnen 55 befestigt. Die Zähne 55 sind nach innen weisend angeordnet und liegen in einer gemeinsamen Ebene.

Auf den Führungsschienen 54 ist ein Schlitten 70 verschiebbar angeordnet, dessen Rahmen in den Figuren 2 und 3 nicht dargestellt ist.

Auf dem Schlitten ist eine Verriegelungseinrichtung mit Blockierstücken 52a,b angeordnet, die über Hebel 53a,b mit einem Zuggriffhebel 61 verbunden sind. Mittels des Zuggriffhebels 61 werden diese Blockierstücke 52a,b von einer entriegelten Position (Figur 2) in eine verriegelte Position (Figur 3) verschoben und umgekehrt. An einem Wandelement 58, durch das der Zuggriffhebel 61 geführt wird, ist die erfindungsgemäße Vorrichtung 1 angeordnet. Auf der Oberseite des Zuggriffhebels 61 ist ein Kontaktelement 12 angeordnet. In der Figur 2, die die entriegelte Stellung zeigt, ist der Zuggriffhebel 61 mit seiner Rastausnehmung 62 an dem Wandelement 58 fixiert. Die Kontaktplatte 12 ist außerhalb der Vorrichtung 1 angeordnet, so dass die Vorrichtung 1 die entriegelte Position detektiert.

Wenn, wie in Figur 3 dargestellt ist, der Zuggriffhebel 61 eingeschoben wird und die Blockierstücke 52a,b ihre Verriegelungsposition einnehmen, wird das Kontaktelement 12 unter die Vorrichtung 1 bewegt, so dass diese mit der Sensoreinheit die Verriegelungsstellung detektieren kann. Über die optische Anzeige 7 wird ein entsprechendes Signal angezeigt.

In den Figuren 2 und 3 ist an der Zahnleiste 51 eine erfindungsgemäße Vorrichtung 1' angeordnet, die innenliegend drei Positionssensoren 3c aufweist und außenliegend drei optische Anzeigen 7' besitzt. Beim Eingreifen der Zähne 56 des Blockierstücks 52a in die Lücken zwischen den Zähnen 55 der Zahnleiste 51 werden diese von den Positionssensoren 3c detektiert. Wenn der Schlitten 70 verschoben wird, ändert sich auch die Position der Blockierstücke 52a,b, so dass nicht alle Zähne 56 des Blockierstücks 52a einem Positionssensor 3c gegenüberliegt. Je nachdem, ob nur ein Sensor 3c zwei oder alle drei Sensoren 3c Zähne 56 detektieren, leuchten auch dementsprechend die optischen Anzeigeelemente 7' auf. Anhand der Anzahl der aufleuchtenden Anzeigenelemente kann der Fahrer beim Vorübergehen erkennen, in welcher Position sich der Schlitten der Verschiebeeinrichtung befindet.

### Bezugszeichenliste

- 1, 1': Vorrichtung
- 2: Anzeigeeinheit
- 3: Sensoreinheit
- 3a: Sensor
- 3b: Sensor
- 3c: Sensor (Positionssensor)
- 4: Auswerteeinheit
- 5: Spannungsquelle
- 6: akustisches Anzeigeelement
- 7: optisches Anzeigeelement

- 10: Gehäuse
- 12: Kontaktelement
- 50: Verschiebeeinrichtung
- 51: Zahnleiste
- 52a,b: Blockierstück
- 53a,b: Hebel
- 54: Führungsschiene
- 55: Zahn
- 56: Zahn
- 57: Feder
- 58: Wandelement

- 61: Zuggriffhebel
- 62: Rastausnehmung
- 63: Rastanordnung
- 64: Griff

- 70: Schlitten

## Patentansprüche

1. Anordnung einer Vorrichtung (1, 1') zum Nachweis und zum Anzeigen der Position von Komponenten von Fahrzeugkupplungen an einer Verschiebeeinrichtung (50), wobei die Vorrichtung mindestens einen Sensor (3a, 3b, 3c) und mindestens ein Anzeigeelement (6, 7) sowie eine eigene Spannungsquelle (5) umfasst,
**dadurch gekennzeichnet,**
**dass** der mindestens eine Sensor (3a, 3b, 3c), das mindestens eine Anzeigeelement (6, 7) und die Spannungsquelle (5) in einem gemeinsamen Gehäuse (10) einer kombinierten Sensor- und Anzeigeeinheit (2, 3) angeordnet sind, welche an der Außenseite einer Verschiebeeinrichtung (50), die eine Zahnleiste (51) und auf einem eine Sattelkupplung tragenden Schlitten (70) Blockierstücke (52a, b) aufweist, und benachbart zu einem Blockierstück (52a, b), das in Verrieglungsstellung mit dem Sensor (3c) der Sensoreinheit (3) zusammenwirkt, angeordnet ist.

2. Anordnung nach Anspruch 1, **dadurch gekennzeichnet, dass** die kombinierte Sensor- und Anzeigeeinheit (2, 3) eine elektronische Auswerteeinheit (4) aufweist.

3. Anordnung nach Anspruch 1 oder 2, **dadurch gekennzeichnet, dass** der Sensor (3a, 3b, 3c) berührungslos arbeitet.

4. Anordnung nach einem der Ansprüche 1 bis 3, **dadurch gekennzeichnet, dass** der Sensor (3a, 3b, 3c) ein elektromagnetischer Sensor ist.

5. Anordnung nach einem der Ansprüche 1 bis 4, **dadurch gekennzeichnet, dass** die Anzeigeeinheit (2) ein am Gehäuse (10) angeordnetes optisches Anzeigeelement (7) aufweist.

6. Anordnung nach einem der Ansprüche 1 bis 5, **dadurch gekennzeichnet, dass** die Anzeigeeinheit (2) ein akustisches Anzeigeelement (6) aufweist.

7. Anordnung nach einem der Ansprüche 1 bis 7, **dadurch gekennzeichnet, dass** die Anzeigeeinheit (2) ein mechanisches Anzeigeelement aufweist.

## Claims

1. Arrangement of a device (1, 1') for detecting and displaying the position of components of vehicle couplings in a displacement device (50), the device comprising at least one sensor (3a, 3b, 3c) and at least one display element (6, 7) and a separate voltage source (5), **characterised in that**
the at least one sensor (3a, 3b, 3c), the at least one display element (6, 7) and the voltage source (5) are arranged in a common housing (10) of a combined sensor and display unit (2, 3) which is arranged on the outer side of a displacement device (50) having a toothed bar (51) and blocking pieces (52a, b) on a carriage (70) which carries a fifth-wheel coupling, and adjacent to a blocking piece (52a, b) which co-operates with the sensor (3c) of the sensor unit (3) in the locking position.

2. Arrangement according to claim 1, **characterised in that** the combined sensor and display unit (2, 3) has an electronic evaluation unit (4).

3. Arrangement according to claim 1 or claim 2, **characterised in that** the sensor (3a, 3b, 3c) functions in a contactless manner.

4. Arrangement according to any one of claims 1 to 3, **characterised in that** the sensor (3a, 3b, 3c) is an electromagnetic sensor.

5. Arrangement according to any one of claims 1 to 4, **characterised in that** the display unit (2) has an optical display element (7) which is arranged on the housing (10).

6. Arrangement according to any one of claims 1 to 5, **characterised in that** the display unit (2) has an acoustic display element (6).

7. Arrangement according to any one of claims 1 to 6, **characterised in that** the display unit (2) has a mechanical display element.

## Revendications

1. Agencement d'un dispositif (1, 1') destiné à détecter et à signaler la position des éléments d'un attelage de véhicule sur un dispositif de manoeuvre (50), ledit dispositif comportant au moins un capteur (3a, 3b, 3c) et au moins un élément de signalisation (6, 7), ainsi que sa propre source de tension (5), **caractérisé en ce que** ledit au moins un capteur (3a, 3b, 3c), ledit au moins un élément de signalisation (6, 7) et la source de tension (5) sont agencés dans un carter (10) commun d'une unité combinée de détection et de signalisation (2, 3), qui est agencée sur le côté extérieur d'un dispositif de manoeuvre (50), qui comporte une crémaillère (51) et des éléments de blocage (52a, b) sur un chariot (70) portant une sellette d'attelage, et à proximité d'un élément de blocage (52a, b) qui, dans la position de verrouillage, coopère avec le capteur (3c) de l'unité de détection (3).

2. Agencement selon la revendication 1,
**caractérisé en ce que** l'unité combinée de détection et de signalisation (2, 3) comporte une unité d'analyse (4) électronique.

3. Agencement selon la revendication 1 ou 2, **caractérisé en ce que** le capteur (3a, 3b, 3c) travaille sans contact.

4. Agencement selon l'une quelconque des revendications 1 à 3, **caractérisé en ce que** le capteur (3a, 3b, 3c) est un capteur électromagnétique.

5. Agencement selon l'une quelconque des revendications 1 à 4, **caractérisé en ce que** l'unité de signalisation (2) comporte un élément de signalisation (7) optique, agencé sur le carter (10).

6. Agencement selon l'une quelconque des revendications 1 à 5, **caractérisé en ce que** l'unité de signalisation (2) comporte un élément de signalisation (6) acoustique.

7. Agencement selon l'une quelconque des revendications 1 à 6, **caractérisé en ce que** l'unité de signalisation (2) comporte un élément de signalisation mécanique.
